# EUROPEAN PATENT APPLICATION

(11) **EP 2 211 496 A1**
(43) Date of publication of application: **28.07.2010**
(21) Application number: 08855262.5
(22) Date of filing: 14.11.2008
(51) Int. Cl.: H04L 9/00, H04L 29/06, H04L 12/28

(54) **KEY MANAGEMENT METHOD**

(30) Priority: 16.11.2007 CN 200710019090
(71) Applicant: China Iwncomm Co., Ltd., Xi'an, Shaanxi 710075 (CN)
(72) Inventor: TIE, Manxia, Shaanxi 710075 (CN); CAO, Jun, Shaanxi 710075 (CN); PANG, Liaojun, Shaanxi 710075 (CN); LAI, Xiaolong, Shaanxi 710075 (CN); HUANG, Zhenhai, Shaanxi 710075 (CN)
(74) Representative: Maiwald Patentanwalts GmbH
(86) International application number: PCT/CN2008/073051
(87) International publication number: WO 2009/067933

(57) **Abstract**

A key management method, is an enhanced RSNA four-way Handshake protocol. Its preceding two way Handshake processes comprise: 1), an authenticator sending a new message 1 which is added a Key Negotiation IDentifier (KNID) and a Message Integrity Code (MIC) based on the intrinsic definition content of the message 1 to an supplicant; (2), after the supplicant receives the new message 1, checking whether the MIC therein is correct; if no, the supplicant discarding the received new message 1; if yes, checking the new message 2, if the checking is successful, sending a message 2 to the authenticator, the process of checking the new message is the same as checking process for the message 1 defined in the IEEE 802.11i-2004 standard document. The method solves the DoS attack problem of the key management protocol in the existing RSNA security mechanism.

## Description

The present application claims priority to Chinese Patent Application No. 200710019090.9, filed with the Chinese Patent Office on November 16, 2007 and entitled "KEY MANAGEMENT METHOD", which is hereby incorporated by reference in its entirety.

### Field of the Invention

The present invention relates to the field of information security technology, and in particular to a method for key management.

### Background of the Invention

In order to solve the security hole problem existing in the security mechanism of Wired Equivalent Privacy (WEP) defined in the international standard ISO/IEC 8802-11 of Wireless Local Area Network (WLAN), Institute of Electrical and Electronics Engineers (IEEE) publishes the IEEE 802.11i standard and proposes the Robust Security Network Association (RSNA) technology based on the backward compatibility, to make up for the security holes existing in WEP.

RSNA performs authentication and key distribution functions through the EAP (Extended Authentication Protocol)-based IEEE 802.1x and the 4-way Handshake protocol. The RSNA security mechanism provides a good way to solve the security problem of WLAN. However, due to its overmuch emphasis on security and lacking of consideration on the availability of the protocol during the design, there comes up a Denial of Service (DoS) problem in the 4-way Handshake protocol. As no protection measures are taken in the message 1 of the 4-way Handshake protocol, the naked message 1 may be utilized by an attacker.

At most one handshake is allowed between an authenticator and each supplicant, and the authenticator has a time-out retransmission function. However, the supplicant does not adopt the same strategy. If the supplicant is configured in a complete state, that is, the supplicant only expects a response to a particular message, provided that the case is: the supplicant receives message 1 and transmits message 2 which is later lost during transmission for some reasons, the authenticator will not receive the expected message 2 and will retransmit message 1 after time-out. However, as the supplicant expects only message 3, the supplicant will discard the retransmitted message 1, resulting in the failure of the protocol. An attacker may make use of this chance to transmit a fake message 1 before the transmission of the legal one, resulting in the supplicant obstructing the protocol. Therefore, during the handshake, the supplicant should enable to receive multiple messages 1 to ensure the continuance of the protocol, that is, the supplicant should enable the simultaneous operation of multiple handshake instances.

Protocol obstruction attack results from the vulnerability of message 1. To address this problem, the supplicant, during the implementation of the protocol, stores multiple Pairwise Transient Keys (PTK), wherein, one is a legal Pairwise Transient Key, and the rest are temporary Pairwise Transient Keys. The supplicant updates only the temporary Pairwise Transient Keys on receiving message 1 and should not update the legal Pairwise Transient Key until the supplicant receives message 3 containing an effective Message Integrity Code (MIC). If the attacker transmits multiple messages 1 containing different Nonces, the supplicant should use a very big storage space to store all Nonces contained in all the received messages 1 as well as new locally-generated Nonces and corresponding temporary Pairwise Transient Keys to ensure that the protocol implementation of the legal authenticator is not obstructed, until the supplicant finishes the handshake and receives a legal Pairwise Transient Key. Though it does not take too much to compute the Pairwise Transient Keys and will not cause the exhaustion of the CPU, there is a danger of storage exhaustion if the attacker purposely increases the frequency of the transmission of the fake message 1. Such a fake attack is easy to be carried out and the danger is very serious. Even one successful attack may ruin all efforts made during a previous authentication process.

### Summary of the Invention

An object of the present invention is to solve the above-mentioned technical problems in the background, and provides a key management method to avert a DoS attack carried out by faking and retransmitting message 1. The technical solution of the invention is as follows:

The present invention provides a key management method, which is an enhanced RSNA 4-way Handshake protocol and includes steps as follows:
1) sending, by an authenticator, to an supplicant a new message 1 which is formed by adding a Key Negotiation Identifier, KNID, and a Message Integrity Code, MIC, to the primary definition content of a message 1;
2) verifying, by the supplicant, whether the MIC contained in the new message 1 is correct on receipt of the new message 1;
   if the MIC is not correct, discarding, by the supplicant, the received new message 1;
   if the MIC is correct, verifying the new message 1, and sending a message 2 to the authenticator if the verification is successful;
3) on receipt of the message 2, verifying, by the authenticator, the message 2, and sending a message 3 to the supplicant if the verification is successful;
4) on receipt of the message 3, verifying, by the supplicant, the message 2, and sending a message 4 to the authenticator if the verification is successful;
5) on receipt of the message 4, verifying, by the authenticator, the message 4, and if the verification is successful, a 4-way Handshake protocol being successfully, negotiating, by the authenticator and the supplicant, a common Pairwise Transient Key, PTK, and obtaining respectively a Group Master Key, GMK of each other;
wherein, the primary definition content of the message 1 and the content of the message 2, the message 3 and the message 4 are the same as definitions in the standard document of IEEE 802.11i-2004, the verification process of the new message 1, the message 2, the message 3 and the message 4 are respectively the same as definitions in the standard document of IEEE 802.11i-2004.

The MIC in the step 1) refers to:
a hash value computed by the authenticator from all fields before the field of MIC by using Pairwise Master Keys (PMKs) negotiated in an authentication phase.

The KNID in the step 1) refers to:
a random number generated by the authenticator if the handshake process is a first 4-way Handshake process after a successful authentication of Robust Security Network Association, RSNA; or
a value computed by the authenticator from the PMK, a random number generated by the authenticator and a random number generated by the supplicant after a last successful 4-way Handshake protocol process, if the handshake process is a key update process.

The handshake process is a key update process, and in the step 2), the supplicant verifies whether the MIC and the KNID are correct on receiving the new message 2;
if the supplicant verifies that the MIC and/or the KNID are not correct, the supplicant discards the received new message 1; or
if the supplicant verifies that the MIC and the KNID are correct, the supplicant performs a primary verification, and sending the message 2 to the authenticator if the verification is successful.

The present invention adds a Message Integrity Code (MIC) and a Key Negotiation IDentifier (KNID) to the primary content of the message 1 of the 4-way Handshake of RSNA to avoid the fakery and retransmission of message 1 and to further enhance the security and robustness of the protocol. The method solves the DoS attack problem of the key management protocol in the existing RSNA security mechanism.

### Detailed Description of the Invention

The method of the invention is as follows:
1) An authenticator adds a Key Negotiation IDentifier (KNID) and a Message Integrity Code (MIC) to a primary definition content of message 1 to form a new message 1, and sends the new message 1 to a supplicant.
2) On receiving the new message 1, the supplicant verifies whether the field of MIC contained in the new message 1 is correct; if the MIC is not correct, the supplicant discards the new message 1; if the MIC is correct, the supplicant performs a primary verification; the supplicant sends a message 2 to the authenticator if the verification is successful; the definition content of the message 2 is the same as the primary definition; the primary definition and the primary verification in the description refers to the definition and verification in the IEEE 802.11i-2004 standard document.

It shall be noted that the MIC in the new message 1 is a hash value computed by the authenticator from all fields before the field of MIC by using Pairwise Master Keys (PMKs) negotiated in an authentication phase. The KNID is a random number generated by the authenticator if the process is the first 4-way Handshake protocol process after the successful RSNA authentication. The KNID is a value computed by the authenticator from the PMK, a Nonce_{A} (a random number generated by the authenticator) and a Nonces (a random number generated by the supplicant) after the last successful 4-way Handshake protocol process if the process is a key update process. The addition of the field of MIC precludes the fakery to the message 1 by the attacker. Such a design of KNID enables the authenticator and the supplicant to implement the synchronization function and precludes the attacker's retransmission of the message 1. During the key update process, the authentication to the message 1 by the supplicant shall also include the authentication to the KNID.
3) On receiving the message 2, the authenticator performs a primary verification on the message 2 and sends a message 3 to the supplicant if the verification is successful. The definition content of message 3 is the same as a primary definition.
4) On receiving the message 3, the supplicant performs a primary verification on the message 2 and sends a message 4 to the authenticator if the verification is successful. The definition content of message 4 is the same as a primary definition.
5) On receiving the message 4, the authenticator performs a primary verification on the message 4, and if the verification is successful, it indicates that the 4-way Handshake protocol is successfully implemented, and the authenticator and the supplicant negotiate a common Pairwise Transient Key and obtains respectively a Group Master Key (GMK) of each other.

## Claims

1. A key management method, wherein a handshake process comprises the following steps:
1) sending, by an authenticator, to an supplicant a new message 1 which is formed by adding a Key Negotiation Identifier, KNID, and a Message Integrity Code, MIC, to the primary definition content of a message 1;
2) verifying, by the supplicant, whether the MIC contained in the new message 1 is correct on receipt of the new message 1;
if the MIC is not correct, discarding, by the supplicant, the received new message 1;
if the MIC is correct, verifying the new message 1, and sending a message 2 to the authenticator if the verification is successful;
3) on receipt of the message 2, verifying, by the authenticator, the message 2, and sending a message 3 to the supplicant if the verification is successful;
4) on receipt of the message 3, verifying, by the supplicant, the message 2, and sending a message 4 to the authenticator if the verification is successful;
5) on receipt of the message 4, verifying, by the authenticator, the message 4, and if the verification is successful, a 4-way Handshake protocol being successfully, negotiating, by the authenticator and the supplicant, a common Pairwise Transient Key, PTK, and obtaining respectively a Group Master Key, GMK of each other;
wherein, the primary definition content of the message 1 and the content of the message 2, the message 3 and the message 4 are the same as definitions in the standard document of IEEE 802.11i-2004, the verification process of the new message 1, the message 2, the message 3 and the message 4 are respectively the same as definitions in the standard document of IEEE 802.11i-2004.

2. The key management method according to claim 1, wherein the MIC in the step 1) refers to:
a hash value computed by the authenticator from all fields before the field of MIC by using Pairwise Master Keys (PMKs) negotiated in an authentication phase.

3. The key management method according to claim 1, wherein the KNID in the step 1) refers to:
a random number generated by the authenticator if the handshake process is a first 4-way Handshake process after a successful authentication of Robust Security Network Association, RSNA; or
a value computed by the authenticator from the PMK, a random number generated by the authenticator and a random number generated by the supplicant after a last successful 4-way Handshake protocol process, if the handshake process is a key update process.

4. The key management method according to claim 1, 2 or 3, wherein the handshake process is a key update process, and in the step 2), the supplicant verifies whether the MIC and the KNID are correct on receiving the new message 2;
if the supplicant verifies that the MIC and/or the KNID are not correct, the supplicant discards the received new message 1; or
if the supplicant verifies that the MIC and the KNID are correct, the supplicant performs a primary verification, and sending the message 2 to the authenticator if the verification is successful.
